# FASCICULE DE BREVET EUROPEEN

(11) **EP 0 549 502 B1**
(45) Date de publication et mention de la délivrance du brevet: **05.06.1996**
(21) Numéro de dépôt: 92470034.7
(22) Date de dépôt: 09.12.1992
(51) Int. Cl.: F16L 58/10

(54) **Revêtement multicouche, avec son procédé d'obtention et son application**
Mehrschichtiger Überzug, sein Herstellungsverfahren und seine Anwendung
Multilayer coating, its process and application

(30) Priorité: 24.12.1991 FR 9116343
(43) Date de publication de la demande: 30.06.1993
(73) Titulaire: PONT-A-MOUSSON S.A., F-54000 Nancy (FR)
(72) Inventeur: Houis, Gérard, F-54000 Nancy (FR); Pedeutour, Jean-Marc, F-54700 Blenod les Pont-à-Mousson (FR)
(74) Mandataire: Puit, Thierry

(56) Documents cités:
- DE-A- 3 508 811
- DE-A- 3 513 207
- FR-A- 2 205 171
- FR-A- 2 212 909
- FR-A- 2 370 918

## Description

La présente invention est relative à un revêtement.

Elle concerne en premier lieu un revêtement multicouche de la totalité de la surface d'un élément métallique ferreux.

On connaît des revêtements à base de bitume de pétrole pour l'intérieur et l'extérieur de la surface d'éléments de réseaux d'eau. Ces revêtements sont d'un faible coût, mais nécessitent l'utilisation de solvants, ce qui augmente les risques d'incendie.

Les revêtements connus dont toutes les couches sont obtenues à partir d'une composition à base de poudre d'époxy apportent une bonne tenue à la corrosion. Mais les variations d'épaisseur importantes du revêtement, en particulier au niveau des cotes d'assemblage des joints (gorges de joint, diamètres de centrage) obligent, soit à multiplier le nombre de modèles de fonderie avec dimensions différentes en fonction des revêtements, soit à usiner les éléments métalliques avant application du revêtement.

Ces revêtements sont constitués de matériau inerte, qui forme barrière à l'égard des éléments extérieurs ; celle-ci, quelle que soit son épaisseur, est sujette à des blessures laissant apparaître le support et au droit desquelles ne s'exerce plus aucune protection, sans mettre en jeu des réactions chimiques entre le revêtement et son support. Il en est ainsi par exemple avec le bitume de pétrole et la poudre d'époxy. Pour que cette protection trouve son maximum d'efficacité, il importe que le bitume ou l'époxy soit exempt de dommages allant jusqu'au métal.

Si ces conditions ne sont pas remplies, il se crée des macropiles de corrosion, souvent encore appelées "macro-éléments", dues à la présence de dommages divers tels que blessures traversantes, fissures, décollements, qui, en permettant une dépassivation locale du fer par abaissement du pH et accès de substances dépassivantes, vont localiser des sites anodiques isolés au sein des zones cathodiques que constituent les surfaces passivées où le revêtement reste encore en contact intime avec la structure métallique. Dès lors, comme le rapport de la surface cathodique à la surface anodique est généralement grand, le débit du courant qui s'établit dans ces macropiles peut être élevé lorsqu'une dépolarisation active de la surface cathodique est possible.

La présente invention vise à remédier à ces inconvénients et à résoudre le nouveau problème technique qui consiste à obtenir à faible coût un revêtement d'élément métallique de réseau d'eau recouvrant toute la surface dudit élément, donc la surface interne et externe, la pose du revêtement pouvant être automatisée.

Dans le problème technique résolu par l'invention, l'élément métallique avec son revêtement doit présenter une bonne tenue face à la corrosion venue des sols acides ou basiques ; comme le sont par exemple des sols calcaires, argileux ou des nappes phréatiques douces ou salées. L'élément revêtu doit également tenir face à la corrosion par les eaux transportées comme par exemple l'eau potable, l'eau adoucie, l'eau usée ou l'eau pluviale. Ledit élément revêtu ne doit pas non plus présenter de migration de produits toxiques, ou qui donnent une coloration à l'eau, ou qui en altèrent le goût ou l'odeur.

Pour obtenir un faible coût de fabrication, le revêtement doit respecter toutes les formes fonctionnelles de l'élément métallique, telles que des gorges et des collets, sans nécessiter d'opérations de retouche après la pose du revêtement.

Le revêtement doit permettre d'économiser de la matière en évitant les surplus tels que par exemple des coulures ou des surépaisseurs.

De plus, l'élément selon l'invention doit également résister à la corrosion aérienne, car il subit cette dernière lors du stockage et du transport avant la pose.

La corrosion aérienne est liée aux variations atmosphériques en température et en humidité. Elle se traduit par une attaque générale de toute la surface d'un élément métallique au contraire de la corrosion des sols qui est constituée entre autre par des effets de piles localisés comme expliqué plus haut.

Enfin, l'élément selon l'invention ne doit pas non plus permettre la formation de macropiles de corrosion et il doit donc avoir une bonne tenue aux chocs qui entraînent les blessures sources des macropiles.

A cet effet, le revêtement multicouche pour la totalité de la surface d'un élément métallique ferreux pour réseau d'eau, comprend, de l'élément métallique vers l'extérieur, au moins une couche de conversion et une couche de revêtement de résine synthétique thermodurcissable d'épaisseur constante.

En variante, ladite couche de conversion a subi une passivation.

En outre, la Demanderesse a découvert qu'un tel revêtement présente une tenue à la corrosion très efficace si la couche de conversion du revêtement selon l'invention est constituée d'un phosphate mixte de zinc et de fer.

Suivant d'autres caractéristiques ou variantes du revêtement :
- la passivation est chromique,
- la passivation est organique,
- les produits organiques de la passivation comprennent de l'acide tannique,
- la résine synthétique thermodurcissable est un époxy,
- il comprend une couche supplémentaire de résine synthétique thermodurcissable recouvrant la première couche de résine synthétique thermodurcissable.

L'invention a également pour objet un procédé pour appliquer un revêtement, tel que décrit ci-dessus, sur la totalité de la surface d'un élément métallique ferreux. Ledit procédé se caractérisé en ce qu'il comprend au moins les étapes successives suivantes :
- un bain de conversion chimique,
- un rinçage à l'eau déminéralisée,
- un dépôt par électrodéposition dans un bain comprenant une résine synthétique dans un milieu aqueux,
- une polymérisation de la résine synthétique.

Suivant d'autres variantes ou caractéristiques, le procédé se distingue par les points suivants :
- l'ajout, entre les étapes de rinçage à l'eau déminéralisée et de dépôt par électrodéposition, d'un bain de passivation suivi d'un rinçage à l'eau déminéralisée
- l'enrichissement par ultrafiltration du liquide du bain d'électrodéposition en résine synthétique,
- l'ajout sur l'élément métallique d'une couche extérieure supplémentaire de résine synthétique,
- la pose de cette couche supplémentaire de résine synthétique par poudrage électrostatique sur éléments métalliques froids ou chauds, par projection électrostatique, par immersion dans un bain fluidisé, ou par électrophorèse suivie d'une cuisson,
- la pose de cette couche supplémentaire peut aussi se faire par pulvérisation des deux composants d'une résine synthétique liquide.

L'invention a encore pour objet l'application d'un revêtement conforme à la définition ci-dessus au recouvrement de toute la surface d'un élément de réseau d'eau, constitué d'un alliage métallique à base de fer et de carbone, ledit élément métallique étant de forme irrégulière, apte au transport d'eau et à être en contact avec les sols.

D'autres caractéristiques et avantages de l'invention apparaîtront à la lecture de la description qui va suivre donnée à titre non limitatif, en se référant aux dessins annexés, dans lesquels :

La Fig. 1 représente en élévation avec coupe partiellement arrachée un élément avec revêtement multicouche selon l'invention.

La Fig. 2 représente un histogramme d'essais de consommation dans le temps d'un revêtement selon l'invention comparé aux autres revêtements sur la totalité d'une surface d'élément pour réseau d'eau.

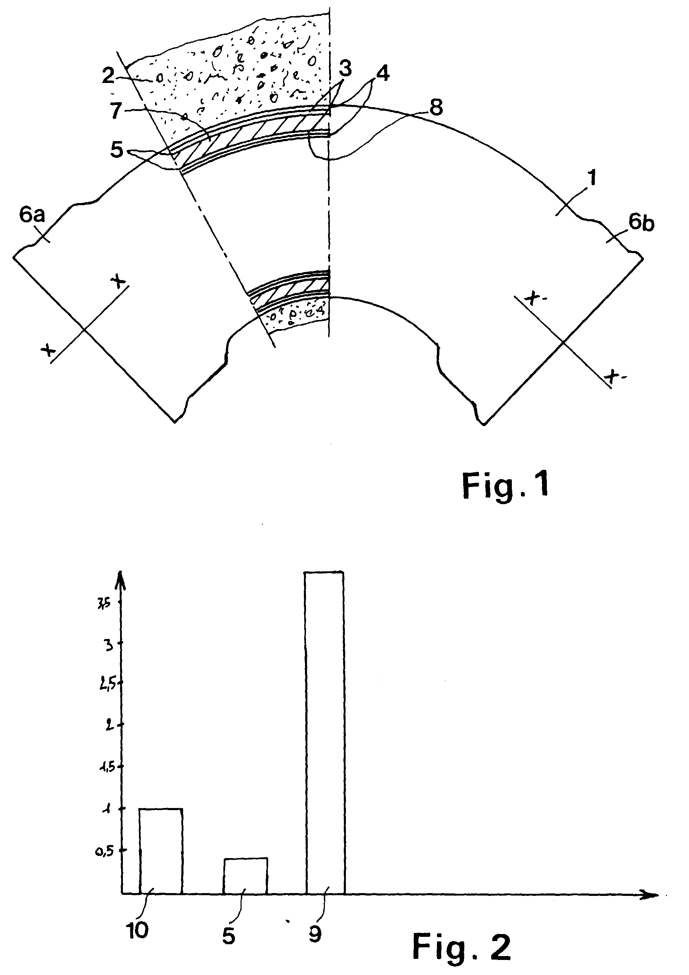

L'élément métallique ferreux 1, brut de fonderie, illustré à la Fig. 1 est posé dans un sol 2. Il est recouvert d'un revêtement multicouche 5 comprenant, au contact de l'élément métallique 1, une couche de conversion 3 recouverte par une couche de résine synthétique thermodurcissable 4. L'épaisseur de chacune des couches est constante et respecte la forme d'origine de l'élément 1 qui est conservée à la surface du revêtement 5. La forme de l'élément 1 est complexe car il est coudé et raccordé à d'autres éléments de canalisation d'un réseau d'eau non représenté. La jonction avec les autres éléments du réseau d'eau se fait au moyen d'un emboîtement 6a ou 6b. Chacun des emboîtements 6a ou 6b (voir la demande de brevet FR-A-2 647 520 au nom de la Demanderesse) présente à son extrémité d'entrée, après un collet, une gorge coaxiale, constituée d'une face légèrement tronconique poursuivie vers le fond de l'emboîtement 6a ou 6b par une surface cylindrique de diamètre constant, terminée, dans le sens radial interne, par une surface plane ou légèrement tronconique, perpendiculaire à l'axe X-X ou X'-X'.

Cette surface plane se prolonge, vers le fond de l'emboîtement 6a ou 6b, par une courbe convexe et par une surface tronconique qui se raccorde finalement à une surface cylindrique de diamètre inférieur au diamètre de la surface cylindrique de la gorge de l'emboîtement 6a ou 6b.

Ladite surface tronconique est à conicité ouverte vers le fond de l'emboîtement 6a ou 6b.

Ainsi, la surface interne de l'emboîtement 6a ou 6b est apte à loger une garniture d'étanchéité.

La surface cylindrique se termine, au fond de l'emboîtement 6a ou 6b, par une butée radiale qui limite la longueur de cette surface cylindrique.

L'élément 1 est obtenu avec la forme particulière de ses emboîtements par moulage de fonderie. Puis le revêtement 5 est appliqué sur la totalité de la surface de l'élément métallique ferreux 1, donc les surfaces externe 7 et interne 8. Cette application se fait par un bain de conversion chimique de l'élément 1, un rinçage à l'eau déminéralisée, un bain de passivation, un rinçage à l'eau déminéralisée et enfin par un dépôt par électrodéposition dans un bain comprenant une résine synthétique dans un milieu aqueux.

En outre le liquide du bain d'électrodéposition est rincé par une ultrafiltration.

La forme particulière de l'élément 1 ayant été respectée, il n'est pas nécessaire d'effectuer des opérations de retouche sur l'élément 1 revêtu.

L'invention a pour objet :
- l'application d'un revêtement 5 conforme à celui décrit ci-dessus, au recouvrement de toute la surface interne et externe d'un élément en fonte d'un réseau d'adduction d'eau potable, et/ou
- l'application d'un revêtement 5 conforme à celui décrit ci-dessus, aux pièces moulées en fonte.

La Fig. 2 représente sous forme d'histogramme, le résultat d'essais entre différents revêtements, un revêtement 9 à base de bitume de pétrole et un revêtement 10 obtenu à partir d'une composition à base de poudre époxy.

Ces revêtements 9, 10 connus, sont comparés avec le revêtement 5 selon l'invention dont la couche de conversion est constituée d'un phosphate mixte de zinc et de fer.

Ces essais consistent à simuler dans un milieu de basse résistivité (100 Ω x cm) une blessure traversant le revêtement 5, 9, 10 jusqu'au métal, d'où création d'un couple électrochimique consistant en une macropile telle que décrit plus haut.

La simulation est réalisée sur un échantillon découpé dans un élément métallique revêtu.

On a placé dans cet échantillon une anode cylindrique de même nature que l'élément métallique. L'anode est enrobée dans une gaine isolante électriquement ne laissant apparaître que l'un des disques d'extrémité. L'anode est reliée à l'échantillon par une liaison électrique incorporant un micro-ampèremètre.

Il s'agit de la comparaison des consommations de métal à l'anode après 200 jours dans un milieu de résistivité 100 Ω x cm, pour les trois types de revêtement ; la consommation de métal étant représentée sur l'histogramme en ordonnée en mm/an.

Ces essais en milieu de résistivité 100 Ω x cm sont également présentés dans le tableau suivant qui compare le revêtement selon l'invention avec un revêtement à base de bitume pour des durées de 100, 158 et 200 jours et un revêtement à base d'époxy par poudrage sur pièces froides pour une durée de 200 jours. La consommation de métal de l'anode a été calculée en fonction du débit de courant (niveau d'attaque).

Les résultats sont regroupés dans le tableau 1 ci-après :

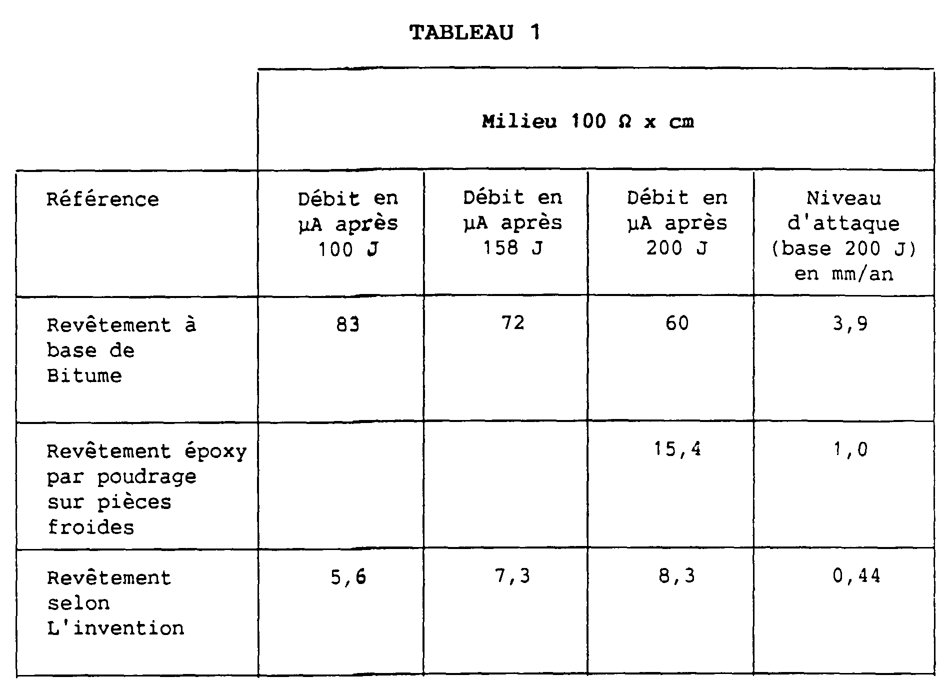

Ces trois revêtements ont également été comparés dans un milieu moins agressif, pour des durées de 100, 158 et 200 jours. La consommation de métal de l'anode a été calculée en fonction du débit de courant (niveau d'attaque).

Les résultats sont regroupés dans le tableau 2 ci-après :

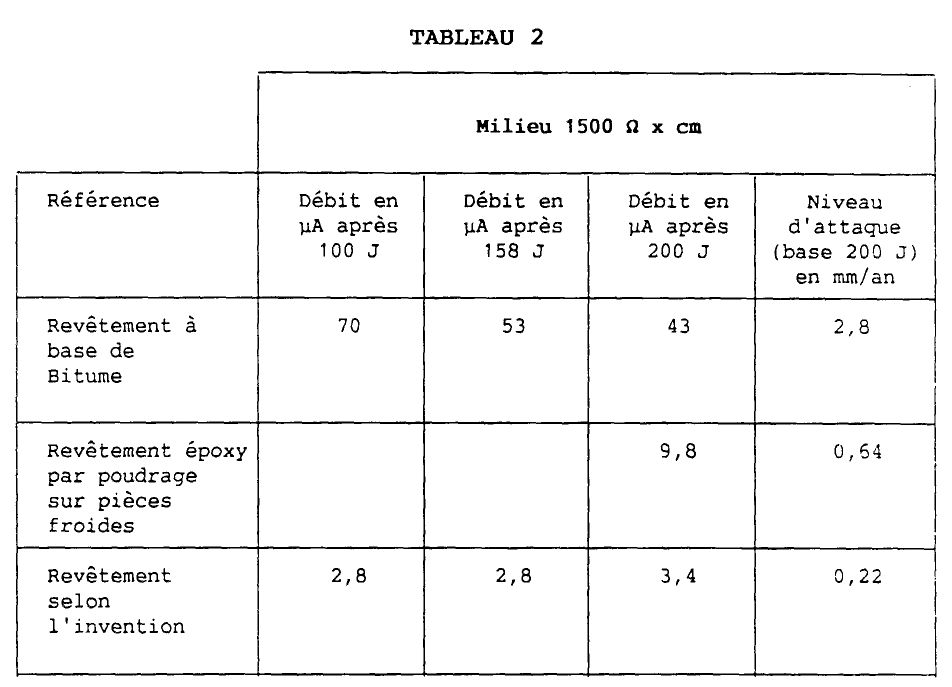

En outre, il a été effectué des mesures d'évolution du courant de corrosion déterminé à partir des droites de TAFEL (µA/Cm²) pour le revêtement selon l'invention et un revêtement sans couche de conversion chimique. Les essais ont duré 1 à 4 jours, 30 jours et 145 jours.

Les résultats sont regroupés dans le tableau 3 ci-après.

**TABLEAU 3**

| | 1 à 4 j | 30 j | 145 j |
|---|---|---|---|
| Revêtement à base de résine thermodurcissable sans couche de conversion chimique | 170 | 135 | 430 |
| Revêtement selon l'invention | 28 | 14 | 90 |

## Revendications

1. Revêtement multicouche (5) pour la totalité de la surface d'un élément métallique ferreux (1) étant pour réseau d'eau, le revêtement (5) comprenant, de l'élément métallique (1) vers l'extérieur, au moins une couche de conversion (3) constituée d'un phosphate mixte de zinc et de fer et une couche de revêtement de résine synthétique thermodurcissable d'épaisseur constante (4).

2. Revêtement selon la revendication 1, caractérisé en ce que la couche de conversion (3) a subi une passivation.

3. Revêtement selon la revendication 2, caractérisé en ce que la passivation est chromique.

4. Revêtement selon la revendication 2, caractérisé en ce que la passivation est organique.

5. Revêtement selon la revendication 4, caractérisé en ce que les produits organiques de la passivation comprennent de l'acide tannique.

6. Revêtement selon l'une des revendications 1 à 5, caractérisé en ce que la résine synthétique thermodurcissable est un époxy.

7. Revêtement selon l'une des revendications 1 à 6, caractérisé en ce qu'il comprend une couche supplémentaire de résine synthétique thermodurcissable recouvrant la première couche de résine synthétique thermodurcissable (4).

8. Procédé pour appliquer un revêtement (5) suivant l'une des revendications 1 à 7 sur la totalité de la surface d'un élément métallique ferreux (1), comprenant au moins les étapes successives suivantes :
- un bain de conversion chimique,
- un rinçage à l'eau déminéralisée,
- un dépôt par électrodéposition dans un bain comprenant une résine synthétique dans un milieu aqueux,
- une polymérisation de la résine synthétique.

9. Procédé selon la revendication 8, caractérisé en ce qu'il comprend, entre les étapes de rinçage à l'eau déminéralisée et du dépôt par électrodéposition, au moins les deux étapes suivantes :
- un bain de passivation,
- un rinçage à l'eau déminéralisée,

10. Procédé selon l'une des revendications 8 ou 9, caractérisé en ce qu'il comprend un enrichissement par ultrafiltration du liquide du bain d'électrodéposition en résine synthétique.

11. Procédé selon l'une des revendications 8 à 10, caractérisé en ce que l'élément métallique est recouvert d'une couche extérieure supplémentaire de résine synthétique.

12. Procédé selon la revendication 11, caractérisé en ce que la couche supplémentaire est un poudrage par projection électrostatique ou immersion dans un bain fluidisé suivi d'une cuisson.

13. Procédé selon la revendication 11, caractérisé en ce que la pulvérisation est une projection des deux composants d'une résine synthétique liquide.

14. Procédé selon la revendication 11, caractérisé en ce qu'il consiste en une électrophorèse suivi d'une cuisson.

15. Application d'un revêtement (5) conforme à l'une quelconque des revendications 1 à 7 au recouvrement de toute la surface d'un élément de réseau d'eau constitué d'un alliage métallique à base de fer et de carbone, ledit élément métallique étant de forme irrégulière, apte au transport d'eau et à être en contact avec les sols.

16. Application d'un revêtement (5) conforme à l'une quelconque des revendications 1 à 7, au recouvrement de toute la surface interne et externe d'un élément en fonte d'un réseau d'adduction d'eau potable.

17. Application d'un revêtement (5) conforme à l'une quelconque des revendications 1 à 7, aux pièces moulées en fonte.

## Patentansprüche

1. Mehrschichtiger Überzug (5) über die gesamte Oberfläche eines Eisenmetallelements (1) für Wasserleitungen, wobei der Überzug (5) von dem Metallelement (1) nach außen aus mindestens einer Umwandlungsschicht (3) aus einem Zink-Eisen-Phosphatgemisch und einer Überzugsschicht (4) aus warmaushärtendem Kunstharz von gleichbleibender Dicke besteht.

2. Überzug nach Anspruch 1,
dadurch gekennzeichnet, daß die Umwandlungsschicht (3) einer Passivierung unterzogen wurde.

3. Überzug nach Anspruch 2,
dadurch gekennzeichnet, daß die Fassivierung eine Chrompassivierung ist.

4. Überzug nach Anspruch 2,
dadurch gekennzeichnet, daß die Passivierung organisch ist.

5. Überzug nach Anspruch 4,
dadurch gekennzeichnet, daß die organischen Passivierungsmittel Tanninsäure enthalten.

6. Überzug nach einem der Ansprüche 1 bis 5,
dadurch gekennzeichnet, daß das warmaushärtende Kunstharz ein Epoxyharz ist.

7. Überzug nach einem der Ansprüche 1 bis 6,
dadurch gekennzeichnet, daß er eine zusätzliche Schicht aus warmaushärtendem Kunstharz aufweist, die die erste Schicht aus warmaushärtendem Kunstharz (4) bedeckt.

8. Verfahren zum Aufbringen eines Überzugs (5) gemäß einem der Ansprüche 1 bis 7 auf der gesamten Oberfläche eines Eisenmetallelements (1), das mindestens die folgenden aufeinanderfolgenden Arbeitsschritte umfaßt:
- ein chemisches Umwandlungsbad,
- einen Spülvorgang mit entmineralisiertem Wasser,
- einen Beschichtungsvorgang durch Galvanostegie in einem Bad, das aus einem Kunstharz in einem wässerigen Medium besteht,
- eine Polymerisierung des Kunstharzes.

9. Verfahren nach Anspruch 8,
dadurch gekennzeichnet, daß es zwischen den Schritten des Spülvorgangs mit entmineralisiertem Wasser und dem Beschichtungsvorgang durch Galvanostegie mindestens die zwei folgenden Arbeitsschritte umfaßt:
- ein Passivierungsbad,
- einen Spülgang mit entmineralisiertem Wasser.

10. Verfahren nach einem der Ansprüche 8 oder 9,
dadurch gekennzeichnet, daß es eine Anreicherung der Flüssigkeit des Galvanostegiebades mit Kunstharz durch Ultrafiltration beinhaltet,

11. Verfahren nach einem der Ansprüche 8 bis 10,
dadurch gekennzeichnet, daß das Metallelement mit einer zusätzlichen äußeren Kunstharzschicht überzogen wird.

12. Verfahren nach Anspruch 11,
dadurch gekennzeichnet, daß die zusätzliche Schicht eine Pulverbeschichtung durch elektrostatisches Aufspritzen oder Eintauchen in ein fluidisiertes Bad mit nachfolgendem Ausbacken ist.

13. Verfahren nach Anspruch 11,
dadurch gekennzeichnet, daß die Pulverbeschichtung durch ein Aufspritzen der beiden Komponenten eines flüssigen Kunstharzes erfolgt.

14. Verfahren nach Anspruch 11,
dadurch gekennzeichnet, daß es aus einer Elektrophorese mit nachfolgendem Ausbacken besteht.

15. Anwendung eines Überzugs (5) gemäß einem der Ansprüche 1 bis 7 für die Beschichtung der gesamten Oberfläche eines Wasserleitungselements, das aus einer Metallegierung auf Eisen- und Kohlenstoffbasis besteht, wobei das genannte Metallelement eine ungleichmäßige Form hat und für die Beförderung von Wasser und für den Kontakt mit Erdböden geeignet ist.

16. Anwendung eines Überzugs (5) gemäß einem der Ansprüche 1 bis 7 für die Beschichtung der gesamten inneren und äußeren Oberfläche eines Gußeisenelements einer Trinkwasserversorgungsleitung.

17. Anwendung eines Überzugs (5) gemäß einem der Ansprüche 1 bis 7 für die aus Gußeisen gegossenen Teile.

## Claims

1. Multilayer coating (5) for the entire surface of a ferrous metal element (1) which is for a water system, the coating (5) comprising, from the metal element (1) towards the outside, at least one conversion layer (3) comprising a mixed zinc and iron phosphate and a coating layer of thermosetting synthetic resin of constant thickness (4).

2. Coating according to Claim 1, characterised in that the conversion layer (3) has been subjected to passivation.

3. Coating according to Claim 2, characterised in that the passivation is chromic.

4. Coating according to Claim 2, characterised in that the passivation is organic.

5. Coating according to Claim 4, characterised in that the organic products of the passivation comprise tannic acid.

6. Coating according to one of Claims 1 to 5, characterised in that the thermosetting synthetic resin is an epoxy.

7. Coating according to one of Claims 1 to 6, characterised in that it comprises an additional layer of thermosetting synthetic resin covering the first layer of thermosetting synthetic resin (4).

8. Process for applying a coating (5) according to one of Claims 1 to 7 to the entire surface of a ferrous metal element (1), comprising at least the following successive steps:
- a chemical conversion bath,
- rinsing with demineralised water,
- deposition by electrodeposition in a bath containing a synthetic resin in an aqueous medium, and
- polymerisation of the synthetic resin.

9. Process according to Claim 8, characterised in that it comprises, between the steps of rinsing with demineralised water and of deposition by electrodeposition, at least the following two steps:
- a passivation bath, and
- rinsing with demineralised water,

10. Process according to one of Claims 8 or 9, characterised in that it comprises enrichment of the liquid of the electrodeposition bath with synthetic resin by means of ultrafiltration.

11. Process according to one of Claims 8 to 10, characterised in that the metal element is covered with an additional outer layer of synthetic resin.

12. Process according to Claim 11, characterised in that the additional layer is a powder coating produced by electrostatic spraying or immersion in a fluidised bath followed by baking.

13. Process according to Claim 11, characterised in that the atomisation is spraying of the two components of a liquid synthetic resin.

14. Process according to Claim 11, characterised in that it comprises electrophoresis followed by baking.

15. Application of a coating (5) according to any one of Claims 1 to 7 covering the entire surface of an element of a water system, which element is made of a metal alloy based on iron and carbon, the said metal element being of irregular shape and suitable for the transport of water and for being in contact with soils.

16. Application of a coating (5) according to any one of Claims 1 to 7, for covering the entire inner and outer surface of a cast iron element of a drinking water supply system.

17. Application of a coating (5) according to any one of Claims 1 to 7 to cast iron castings.
